# EUROPÄISCHE PATENTSCHRIFT

(11) **EP 1 527 962 B1**
(45) Veröffentlichungstag und Bekanntmachung des Hinweises auf die Patenterteilung: **20.09.2006**
(21) Anmeldenummer: 04023391.8
(22) Anmeldetag: 01.10.2004
(51) Int. Cl.: B60R 21/20

(54) **Gassackmodul**
Air bag module
Module de coussin gonflable

(30) Priorität: 29.10.2003 DE 20316601 U
(43) Veröffentlichungstag der Anmeldung: 04.05.2005
(73) Patentinhaber: TRW Automotive Safety Systems GmbH, 63743 Aschaffenburg (DE)
(72) Erfinder: Frisch, Ralf, 63776 Mömbris (DE)
(74) Vertreter: Strass, Jürgen

(56) Entgegenhaltungen:
- DE-A- 10 036 759
- GB-A- 2 384 211
- US-A- 6 155 594

## Beschreibung

Die Erfindung betrifft ein Gassackmodul gemäß dem Oberbegriff des Anspruchs 1.

Bei derartigen Gassackmodulen entfaltet sich der Gassack durch eine ringförmige Austrittsöffnung, wenn das Gassackmodul aktiviert wird.

Ein Beispiel eines solchen Gassacksmoduls ist in der DE 100 36 759 A gezeigt. Der Diffusor dieses Gassackmoduls ist teleskopierbar mit einem inneren und einem äußeren Rohr ausgebildet, wobei ein Zentrumsabschnitt der Vorderwand des Gassacks zwischen einer Abdeckplatte des Gassackmoduls und der Oberseite des inneren Teleskoprohrs des Diffusors eingeklemmt ist. Im Aktivierungsfall fährt das innere Teleskoprohr mit der Abdeckplatte um einen vorbestimmten Weg aus dem äußeren Teleskoprohr aus.

Ferner ist aus der GB 2 384 211 A ein Gassackmodul bekannt, bei dem eine Abdeckkappe um einen vorbestimmten Weg in das Innere des Gassackmoduls bewegt werden kann, um einen elektrischen Kontakt zwischen zwei Hupkontakten zu schließen, die auf der Rückseite der Abdeckkappe bzw. auf einem Teil der Lenkradnabe angeordnet sind.

Ziel der Erfindung ist es, bei einem Gassackmodul der eingangs genannten Art eine einfache und kostengünstige Möglichkeit zu schaffen, eine Hupfunktion zu integrieren, sowie einen schnelle und sichere Entfaltung des Gassacks sicherzustellen.

Hierzu ist ein Gassackmodul mit den Merkmalen des Anspruchs 1 vorgesehen. Obwohl der mittlere Abschnitt der Abdeckkappe bei der Entfaltung des Gassacks am Gassackmodul zurückgehalten wird, ist er erfindungsgemäß so befestigt, daß er um einen vorbestimmten Weg in ein Lenkrad, in dem das Gassackmodul aufgenommen ist, hinein gerichtet verschoben werden kann, wodurch die beiden Hupkontakte in Berührung kommen und einen Signalstromkreis zur Erzeugung eines Hupsignals schließen können.

Bevorzugt ist die Abdeckkappe so am Gassackmodul befestigt, daß die gesamte Abdeckkappe in der ersten Richtung bewegt werden kann. Die Kappe ist dann vorteilhaft so starr, daß bei einem Druck auf eine Stelle der Abdeckkappe die gesamte Kappe in der ersten Richtung verschoben wird.

Alternativ ist aber auch denkbar, bestimmte Abschnitte der Kappe so elastisch zu gestalten, daß diese in das Gassackmodul hineingedrückt werden können, um die Hupkontakte zu schließen, ohne daß die restliche Kappe mitbewegt wird.

Platzsparend und kostengünstig lassen sich die Hupkontakte an einer Kontaktfolie ausbilden.

Bevorzugt wird bei der Entfaltung des Gassacks die gesamte Abdeckkappe angehoben.

Vorzugsweise ist der erste Weg kürzer als der zweite Weg, da zum Schließen der Hupkontakte eine deutlich kürzere Wegstrecke vorgesehen sein muß als zur Bereitstellung einer Austrittsöffnung für den Gassack.

In dieser Ausführungsform kann die Abdeckkappe so starr sein, daß sie während des Austretens des Gassacks bei der Entfaltung nur wenig oder gar nicht verformt wird.

Alternativ ist es auch möglich, z.B. in an sich bekannter Weise rings um den mittleren Abschnitt der Abdeckkappe Sollbruchstellen oder Scharniere vorzusehen, entlang denen andere Abschnitte der Abdeckkappe vom mittleren Abschnitt getrennt werden oder zu diesem hin aufklappen, um die Austrittsöffnung für den Gassack freizugeben.

Vorteilhaft verbindet das Befestigungsmittel den mittleren Abschnitt der Abdeckkappe mit dem der Abdeckkappe zugewandten Ende eines Diffusors. Hierbei kann das Befestigungsmittel wenigstens einen an der Abdeckkappe befestigten Bolzen umfassen, der einen Anschlag aufweist, der eine Bewegung des Bolzens relativ zum der Abdeckkappe zugewandten Ende des Diffusors begrenzt. Durch eine derartige Anordnung lassen sich sowohl der erste als auch der zweite Weg auf einfache Weise einstellen.

Es kann z.B. ein starrer Einleger im mittleren Abschnitt der Abdeckkappe vorgesehen und der Bolzen am Einleger befestigt sein. So läßt sich die Zugbelastung beim Entfalten des Gassacks sicher von der Abdeckkappe auf den Diffusor und damit auf das Lenkrad übertragen. Auch andere geeignete Arten von Befestigungsmitteln sind denkbar.

Um das Gassackmodul nach außen zu verschließen, ist es möglich, die Abdeckkappe an einem Modulgehäuse zu verrasten. Diese Rastverbindung öffnet sich bevorzugt bei der Entfaltung des Gassacks, um eine Austrittsöffnung für den Gassack freizugeben. Die Austrittsöffnung kann in diesem Fall z.B. ringförmig zwischen einem Rand der Abdeckkappe und einem Rand des Modulgehäuses gebildet sein.

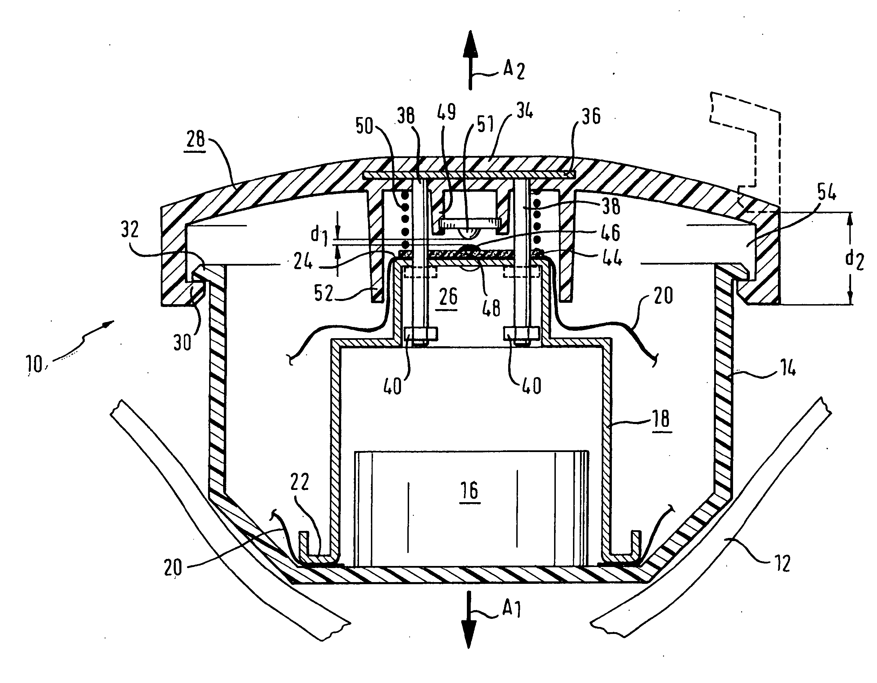

Weitere Merkmale und Vorteile der Erfindung ergeben sich aus der nachfolgenden Beschreibung im Zusammenhang mit der Zeichnung, deren einzige Figur einen schematischen Schnitt durch ein erfindungsgemäßes Gassackmodul, eingesetzt in ein Lenkrad, zeigt.

Das Gassackmodul 10 ist im Nabenbereich eines stilisiert angedeuteten Lenkrades 12 aufgenommen.

In einem Modulgehäuse 14 oder einem Generatorträger ist ein Gasgenerator 16 befestigt, der unter einem Diffusor 18 angeordnet ist. Der Diffusor 18 ist ein mit Ausströmöffnungen versehener Käfig oder Kasten aus einem geeigneten Material, durch den das durch den Gasgenerator 16 freigesetzte Gas in einen vor der Aktivierung des Gassackmoduls 10 gefaltet im Modulgehäuse 14 aufgenommenen Gassack 20 strömt.

Ein Rand eines Einblasmundes des Gassacks 20 ist an einem unteren, zum Lenkrad gerichteten Ende des Diffusors 18 über einen einstückig am Diffusor 18 ausgebildeten Gassackhaltering 22 festgelegt. Der Diffusor 18 ist über den Gassackhaltering 22 fest mit dem Modulgehäuse 14 verbunden. Ein Zentrumsabschnitt 24 einer Vorderwand des Gassacks 20, die sich im aufgeblasenen Zustand in Richtung des Fahrzeuginsassen erstreckt, ist an einem oberen, der Abdeckkappe 28 zugewandten Ende 26 des Diffusors 18 fest befestigt. Der aufgeblasene Gassack 20 weist infolgedessen in der Mitte seiner Vorderwand eine Einbuchtung auf, so daß der Gassack 20 aufgeblasen eine ringförmige Gestalt annimmt. Durch eine entsprechende Gestaltung, die hier nicht gezeigt, dem Fachmann aber geläufig ist, ist dafür gesorgt, daß die Mündung der Einbuchtung so klein gehalten ist, daß kein Körperteil des Fahrzeuginsassen versehentlich darin eindringen kann.

Das Gassackmodul 10 ist nach außen, d.h. im eingebauten Zustand zum Fahrzeuginnenraum hin, durch eine Abdeckkappe 28 verschlossen. Die Abdeckkappe 28 ist randseitig über eine Rastverbindung, die aus ersten, an der Abdeckkappe 28 angeordneten Rastelementen 30 sowie zweiten, am Rand des Gehäuses 14 angeordneten Rastelementen 32 besteht, am Gehäuse 14 befestigt. Die Rastelemente 30, 32 können z.B. durch umlaufende, an der Abdeckkappe 28 bzw. dem Modulgehäuse 14 angeformte Leisten gebildet sein. Die Rastverbindung 30, 32 ist so ausgelegt, daß sie sich bei einer Entfaltung des Gassacks 20 öffnet.

Ein mittlerer Abschnitt 34 der Abdeckkappe 28, der sich über dem Diffusor 18 befindet, ist mit einem starren Metalleinleger 36 verstärkt, von dem im hier gezeigten Fall zwei Bolzen 38 abstehen. Die Bolzen 38 können einstückig mit dem Einleger 36 ausgebildet oder auf andere geeignete Weise mit diesem verbunden sein.

Die Bolzen 38 ragen durch das der Abdeckkappe zugewandte Ende 26 des Diffusors 18 vorgesehene Öffnungen hindurch und sind jeweils an ihrem innerhalb des Diffusors 18 liegenden Ende mit einem Anschlag 40 in Form einer Mutter versehen. Die Größe der Öffnungen am oberen Ende des Diffusors 18 ist so gewählt, daß die Anschläge 40 diese nicht passieren können.

Jeder der Bolzen 38 zusammen mit dessen Anschlag 40 wirkt als Befestigungsmittel, über das der mittlere Abschnitt 34 der Abdeckkappe 28 sicher am Diffusor 18 und damit am Gassackmodul 10 und dem Lenkrad 12 befestigt ist.

Die Anschläge 40 sind so angeordnet, daß die Bolzen 38 ein gewisses Spiel sowohl in einer ersten Richtung A₁, die in das Gassackmodul 10 hinein gerichtet ist als auch in einer zweiten Richtung A₂, die der ersten Richtung A₁ entgegengerichtet ist, besitzen. Die Richtungen A₁, A₂ liegen parallel zu einer Achse des Gassackmoduls 10 bzw. des Gasgenerators 16.

Im gezeigten Beispiel ist die Abdeckkappe 28 so starr, daß sich die gesamte Abdeckkappe 28 um einen ersten Weg d₁ entlang der ersten Richtung A₁ in Richtung des Inneren des Gassackmoduls 10 verschieben läßt. Diese Verschiebung dient dazu, ein Hupsignal zu erzeugen.

Hierzu ist an einer Oberseite des oberen Endes 26 des Diffusors 18 eine Kontaktfolie 44 befestigt, an der ein erster Hupkontakt 46 sowie ein zweiter Hupkontakt 48 ausgebildet sind. Die Kontaktfolie 44 kann z.B. in Form eines bekannten Folienschalters ausgebildet sein.

An der zum Inneren des Gassackmoduls 10 gerichteten Unterseite des mittleren Abschnitts 34 der Abdeckkappe 28 steht ein rohrförmiges Element 49 ab, in dem eine mit einem Vorsprung 51 versehenen Platte befestigt ist. Im fertig montiertem Gassackmodul 10 befindet sich der Vorsprung 51 in einem Abstand d₁ von der Kontaktfolie 44.

Wird nun die Abdeckkappe 28 durch Druck auf ihre Oberseite um den Weg d₁ in der ersten Richtung A₁ verschoben, drückt der Vorsprung 42 auf die Kontaktfolie 44, wodurch die Hupkontakte 46, 48 miteinander in Kontakt kommen.

Zwischen dem oberen Ende 26 des Diffusors 18 und der Unterseite des mittleren Abschnitts 34 der Abdeckkappe 28 ist eine Rückstellfeder 50 angeordnet, die dafür sorgt, daß der Vorsprung 51 im Normalbetrieb nicht auf die Kontaktfolie 44 einwirkt.

An der Unterseite der Abdeckkappe 28 ist außerdem eine rohrförmige Führung 52 angeformt, die in Durchmesser und Länge so angepaßt ist, daß sie das obere Ende 26 des Diffusors 18 umgreift und so eine Führung für die Abdeckkappe 28 bei der Betätigung der Hupe bietet.

Bei der Aktivierung des Gassackmoduls 10 setzt der Gasgenerator 16 unter Druck stehendes Gas frei, das durch im Diffusor 18 vorgesehene (nicht gezeigte) Ausströmöffnungen in den Gassack 20 einströmt. Aufgrund des sich im Gassack 20 aufbauenden Druckes, der auch auf die Unterseite der Abdeckkappe 28 einwirkt, wird die Rastverbindung 30, 32 gelöst und die gesamte Abdeckkappe 28 wird um einen zweiten Weg d₂ in der zweiten Richtung A₂ angehoben. Durch das Anheben der Abdeckkappe 28 wird randseitig eine ringförmige Austrittsöffnung 54 freigegeben, durch die sich der Gassack 20 entfaltet.

Die Bewegung der Abdeckkappe 28 wird dadurch begrenzt, daß die Anschläge 40 an den Enden der Bolzen 38 in Anlage an das obere Ende 26 des Diffusors 18 kommen. Die Endposition der Anschläge 40 sowie der Abdeckkappe 28 (schematisch auf einer Seite dargestellt) ist in gestrichelten Linien gezeigt.

Sowohl der Zentrumsabschnitt 24 der Vorderwand des Gassacks 20 als auch der mittlere Abschnitt 34 der Abdeckkappe 28 sind an einer freien Bewegung gehindert, wobei sich aber der mittlere Abschnitt 34 sowohl in der ersten als auch in der zweiten Richtung A₁, A₂ um einen gewissen vorbestimmten Weg d₁, d₂ bewegen kann. Es kommt jedoch während einer Entfaltung des Gassacks 20 nicht dazu, daß sich der mittlere Abschnitt 34 der Abdeckkappe 28 vollständig vom Gassackmodul 10 löst.

Die Hupkontakte könnten auch an einer anderen Stelle im Gassackmodul angeordnet sein, wo sie durch Niederdrücken der Abdeckkappe um den Weg d₁ miteinander in Kontakt gebracht werden können. Selbstverständlich lasen sich die Hupkontakte auch anderes als in Form einer Kontaktfolie oder eines Folienschalters realisieren.

Die Rastverbindung 30, 32 ist so ausgelegt, daß die Abdeckkappe zumindest um den Weg d₁ in der ersten Richtung A₁ verschoben werden kann, ohne daß die Rastverbindung 30, 32 dauerhaft gelöst wird.

Der Einleger 36 kann in die Abdeckkappe 28 eingespritzt oder eingegossen sein. Auch das rohrförmige Element 41 sowie die Führung 52 können einstückig an die Abdeckkappe 28 angespritzt oder angegossen sein.

Es wäre auch möglich, die Abdeckkappe 28 so auszubilden, daß um den mittleren Abschnitt 34 gelegene Abschnitte sich von diesem lösen oder zu diesem hinklappen, um eine Austrittsöffnung für den Gassack 20 freizugeben.

## Patentansprüche

1. Gassackmodul,umfassend
ein Modulgehäuse (14),
einen Gasgenerator (16),
einen Diffusor (18), unter dem der Gasgenerator (16) angeordnet ist,
einen Gassack (20) mit einer Vorderwand, und
eine Abdeckkappe (28) mit einem mittleren Abschnitt (34), der über wenigstens ein Befestigungsmittel so am Gassackmodul (10) befestigt ist, daß der mittlere Abschnitt (34) bei einer Entfaltung des Gassacks (20) an einer freien Bewegung gehindert ist,
wobei das Befestigungsmittel so ausgelegt ist, daß sich der mittlere Abschnitt (34) der Abdeckkappe (28) bei der Entfaltung des Gassacks (20) in einer zweiten Richtung (A₂) um einen vorbestimmten zweiten Weg (d₂) bewegen kann, so daß die Abdeckkappe (28) eine Austrittsöffnung (54) für den Gassack (20) freigibt,
**dadurch gekennzeichnet, daß**
der Diffusor (18) fest mit dem Modulgehäuse (14) verbunden ist,
das Gassackmodul (10) wenigstens einen ersten und wenigstens einen zweiten Hupkontakt (46, 48) umfaßt, wobei das Befestigungsmittel so ausgelegt ist, daß sich der mittlere Abschnitt (34) der Abdeckkkappe (28) um einen vorbestimmten ersten Weg (d₁) in einer der zweiten Richtung (A₂) entgegengesetzten ersten Richtung (A₁) relativ zum Diffusor (18) in das Innere des Gassackmoduls (10) hinein gerichtet bewegen läßt, um einen Kontakt zwischen dem ersten und dem zweiten Hupkontakt (46, 48) zu schließen, und
wenigstens einer der Hupkontakte (46, 48) an einem der Abdeckkappe (28) zugewandten Ende (26) des Diffusors (18) angeordnet ist.

2. Gassackmodul nach Anspruch 1, **dadurch gekennzeichnet, daß** die Abdeckkappe (28) so am Gassackmodul (10) befestigt ist, daß die gesamte Abdeckkappe (28) in der ersten Richtung (A₁) bewegt werden kann.

3. Gassackmodul nach einem der vorhergehenden Ansprüche, **dadurch gekennzeichnet, daß** die Hupkontakte (46, 48) an einer Kontaktfolie (44) ausgebildet sind.

4. Gassackmodul nach einem der vorhergehenden Ansprüche, **dadurch gekennzeichnet, daß** bei der Entfaltung des Gassacks (20) die gesamte Abdeckkappe (28) angehoben wird.

5. Gassackmodul nach einem der vorhergehenden Ansprüche, **dadurch gekennzeichnet, daß** der erste Weg (d₁) kürzer als der zweite Weg (d₂) ist.

6. Gassackmodul nach einem der vorhergehenden Ansprüche, **dadurch gekennzeichnet, daß** das Befestigungsmittel den mittleren Abschnitt (34) der Abdeckkappe (28) mit einem der Abdeckkappe (28) zugewandten Ende (26) eines Diffusors (18) verbindet.

7. Gassackmodul nach Anspruch 6, **dadurch gekennzeichnet, daß** das Befestigungsmittel wenigstens einen an der Abdeckkappe (28) befestigten Bolzen (38) umfaßt, der einen Anschlag (40) aufweist, der eine Bewegung des Bolzens (38) relativ zum der Abdeckkappe (28) zugewandten Ende (26) des Diffusors (18) begrenzt.

8. Gassackmodul nach Anspruch 7, **dadurch gekennzeichnet, daß** ein starrer Einleger (36) im mittleren Abschnitt (34) der Abdeckkappe (28) vorgesehen und der Bolzen (38) am Einleger (36) befestigt ist.

9. Gassackmodul nach Anspruch 8, **dadurch gekennzeichnet, daß** der Einleger (36) aus Metall besteht.

10. Gassackmodul nach einem der vorhergehenden Ansprüche, **dadurch gekennzeichnet, daß** die Abdeckkappe (28) an einem Modulgehäuse (14) verrastet ist.

## Claims

1. A gas bag module comprising
a module housing (14),
a gas generator (16),
a diffusor (18) below which the gas generator (16) is arranged,
a gas bag (20) having a front wall, and
a covering cap (28) having a central section (34) which is fastened to the gas bag module (10) by at least one fastening means such that the central section (34) is prevented from a free movement upon deployment of the gas bag (20),
the fastening means being designed such that upon deployment of the gas bag (20) the central section (34) of the covering cap (28) can move in a second direction (A₂) by a predetermined second path (d₂), so that the covering cap (28) exposes an outlet opening (54) for the gas bag (20),
**characterized in that**
the diffusor (18) is firmly connected to the module housing (14),
the gas bag module (10) includes at least one first and at least one second horn contact (46, 48), the fastening means being designed such that the central section (34) of the covering cap (28) can be moved in relation to the diffusor (18) by a predetermined first path (d₁) in a first direction (A₁) opposed to the second direction (A₂) directed into the interior of the gas bag module (10), in order to close a contact between the first and second horn contacts (46, 48), and
at least one of the horn contacts (46, 48) is arranged on an end (26) of the diffusor (18) facing the covering cap (28).

2. The gas bag module according to Claim 1, **characterized in that** the covering cap (28) is fastened to the gas bag module (10) such that the entire covering cap (28) can be moved in the first direction (A₁).

3. The gas bag module according to either of the preceding claims, **characterized in that** the horn contacts (46, 48) are formed on a contact foil (44).

4. The gas bag module according to any of the preceding claims, **characterized in that** upon deployment of the gas bag (20) the entire covering cap (28) is lifted.

5. The gas bag module according to any of the preceding claims, **characterized in that** the first path (d₁) is shorter than the second path (d₂).

6. The gas bag module according to any of the preceding claims, **characterized in that** the fastening means connects the central section (34) of the covering cap (28) with an end (26) of a diffusor (18) facing the covering cap (28).

7. The gas bag module according to Claim 6, **characterized in that** the fastening means includes at least one pin (38) which is fastened to the covering cap (28) and has a stop (40) which limits a movement of the pin (38) relative to the end (26) of the diffusor (18) facing the covering cap (28).

8. The gas bag module according to Claim 7, **characterized in that** a rigid insert (36) is provided in the central section (34) of the covering cap (28) and the pin (38) is fastened to the insert (36).

9. The gas bag module according to Claim 8, **characterized in that** the insert (36) consists of metal.

10. The gas bag module according to any of the preceding claims, **characterized in that** the covering cap (28) is latched to a module housing (14).

## Revendications

1. Module de coussin à gaz comprenant
un boîtier de module (14),
un générateur de gaz (16),
un diffuseur (18) sous lequel est agencé le générateur de gaz (16),
un coussin à gaz (20) avec une paroi antérieure, et
un couvercle (28) avec un tronçon médian (34) qui est fixé au module de coussin à gaz (10) par au moins un moyen de fixation de telle sorte que le tronçon médian (34) est empêché de se déplacer librement lors d'un déploiement du coussin à gaz (20),
le moyen de fixation étant conçu de telle sorte que le tronçon médian (34) du couvercle (28) peut se déplacer lors du déploiement du coussin à gaz (20) dans une deuxième direction (A₂) de la valeur d'une deuxième course (d₂) prédéterminée, de telle sorte que le couvercle (28) libère un orifice de sortie (54) pour le coussin à gaz (20),
**caractérisé en ce que**
le diffuseur (18) est relié de manière solidaire au boîtier de module (14),
le module de coussin à gaz (10) comprend au moins un premier et au moins un deuxième contact de klaxon (46, 48), le moyen de fixation étant conçu de telle sorte que le tronçon médian (34) du couvercle (28) peut être déplacé d'une première course (d₁) prédéterminée dans une première direction (A₁) opposée à la deuxième direction (A₂) par rapport au diffuseur (18) en étant dirigé jusqu'à l'intérieur du module de coussin à gaz (10) pour établir un contact entre les premier et deuxième contacts de klaxon (46, 48), et
au moins un des contacts de klaxon (46, 48) est agencé à une extrémité (26) du diffuseur (18), qui est tournée vers le couvercle (28).

2. Module de coussin à gaz selon la revendication 1, **caractérisé en ce que** le couvercle (28) est fixé au module de coussin à gaz (10) de telle sorte que tout le couvercle (28) peut être déplacé dans la première direction (A₁).

3. Module de coussin à gaz selon l'une des revendications précédentes, **caractérisé en ce que** les contacts de klaxon (46, 48) sont réalisés sur une feuille de contact (44).

4. Module de coussin à gaz selon l'une des revendications précédentes, **caractérisé en ce que** lorsque du déploiement du coussin à gaz (20), le couvercle (28) tout entier est soulevé.

5. Module de coussin à gaz selon l'une des revendications précédentes, **caractérisé en ce que** la première course (d₁) est plus courte que la deuxième course (d₂).

6. Module de coussin à gaz selon l'une des revendications précédentes, **caractérisé en ce que** le moyen de fixation relie le tronçon médian (34) du couvercle (28) à une extrémité (26) d'un diffuseur (18), qui est tournée vers le couvercle (28).

7. Module de coussin à gaz selon la revendication 6, **caractérisé en ce que** le moyen de fixation comprend au moins un boulon (38) fixé sur le couvercle (28), qui présente une butée (40) qui limite un mouvement du boulon (38) par rapport à l'extrémité (26) d'un diffuseur (18), qui est tournée vers le couvercle (28).

8. Module de coussin à gaz selon la revendication 7, **caractérisé en ce qu'**il est prévu un insert (36) dans le tronçon médian (34) du couvercle (28), et le boulon (38) est fixé sur l'insert (36).

9. Module de coussin à gaz selon la revendication 8, **caractérisé en ce que** l'insert (36) est en métal.

10. Module de coussin à gaz selon l'une des revendications précédentes, **caractérisé en ce que** le couvercle (28) est enclenché sur un boîtier de module (14).
